# EUROPEAN PATENT APPLICATION

(11) **EP 4 650 693 A1**
(43) Date of publication of application: **19.11.2025**
(21) Application number: 24741359.4
(22) Date of filing: 12.01.2024
(51) Int. Cl.: F25D 23/02, B60N 3/10, E06B 7/22

(54) **REFRIGERATOR SEAL, VEHICLE-MOUNTED REFRIGERATOR AND VEHICLE**

(30) Priority: 12.01.2023 CN 202310068016; 12.01.2023 CN 202320136680 U
(71) Applicant: Shanghai Lixiang Automobile Co., Ltd., Shanghai 201800 (CN)
(72) Inventor: ZHANG, Ziwen, Shanghai 201800 (CN); QIU, Peng, Shanghai 201800 (CN); LI, Zhizhong, Shanghai 201800 (CN)
(74) Representative: Maiwald GmbH
(86) International application number: PCT/CN2024/071953
(87) International publication number: WO 2024/149363

(57) **Abstract**

A refrigerator seal, a vehicle-mounted refrigerator and a vehicle. The refrigerator seal (10) comprises a seal main body (1) and a sealing elastic strip (2), the sealing elastic strip (2) being connected to the sealing member main body (1); the sealing elastic strip (2) comprises an elastic strip end portion (21) distant from the sealing member main body (1); the sealing elastic strip (2) and the sealing member main body (1) enclose a deformation cavity (3); and the elastic strip end portion (21) and the sealing member main body (1) are spaced apart to form an opening (31) in communication with the deformation cavity (3). The opening (31) provides a deformation space for the deformation of the sealing elastic strip (2), so that the sealing elastic strip (2) has improved elasticity, and has better sealing performance under low-temperature conditions.

## Description

### CROSS-REFERENCE TO RELATED APPLICATIONS

This application claims the priority of Chinese patent applications No. 202310068016.5 and 202320136680.4 filed in China on January 12, 2023, the entire contents of which are incorporated herein by reference.

### FIELD

The present invention relates to the field of vehicle devices, in particular to a refrigerator seal, a vehicle-mounted refrigerator and a vehicle.

### BACKGROUND

In order to make the vehicle experience better, there are more and more vehicle-mounted devices on the market, and a vehicle-mounted refrigerator is one of them.

An airbag sealing strip is installed on a refrigerator door of the vehicle-mounted refrigerator for sealing. The airbag sealing strip is usually made of silica gel materials. Because of the nature of the materials, the elasticity of the airbag sealing strip usually becomes low at a low temperature, thus affecting the sealing effect of the refrigerator.

In view of this, the airbag sealing strip needs to be improved.

### SUMMARY

The present invention provides a refrigerator seal with a good sealing performance, a vehicle-mounted refrigerator and a vehicle.

A refrigerator seal according to an embodiment of the present invention includes a seal body and a sealing elastic strip, and the sealing elastic strip is connected to the seal body. The sealing elastic strip includes an elastic strip end part away from the seal body, the sealing elastic strip and the seal body enclose a deformation cavity, and the elastic strip end part is spaced apart from the seal body to form an opening communicated with the deformation cavity.

Further, a part of the sealing elastic strip is arranged opposite to the seal body, and a projection of the part of the sealing elastic strip towards the seal body covers the seal body.

Further, a part of the sealing elastic strip is arranged opposite to the opening, and a projection of the part of the sealing elastic strip towards the opening covers the opening.

Further, the sealing elastic strip includes a first elastic strip portion and a second elastic strip portion, the first elastic strip portion is connected with the seal body, and the second elastic strip portion is connected with the first elastic strip portion; and a groove is arranged at a joint of the first elastic strip portion and the second elastic strip portion, and the groove is communicated with the deformation cavity.

Further, the sealing elastic strip includes a first elastic strip portion connected with the seal body and a second elastic strip portion connected with the first elastic strip portion; and a thickness of a joint of the first elastic strip portion and the second elastic strip portion is less than a thickness of the first elastic strip portion, and the thickness of the joint of the first elastic strip portion and the second elastic strip portion is less than a thickness of the second elastic strip portion.

Further, the first elastic strip portion has a first connection end adjacent to the seal body and a second connection end adjacent to the second elastic strip portion, and a thickness of the first connection end is greater than a thickness of the second connection end.

Further, the sealing elastic strip further includes a third elastic strip portion, one end of the third elastic strip portion is connected with the second elastic strip portion, and the other end of the third elastic strip portion extends towards the seal body.

Further, an engaging block structure is connected to a side of the seal body away from the sealing elastic strip, the engaging block structure includes an engaging block body and an engaging part, and the engaging part is connected to an outer side of the engaging block body.

Further, the engaging part includes a first end portion connected with the engaging block body and a second end portion away from the first end portion, and a width of the first end portion is greater than a width of the second end portion.

Further, the engaging part is tapered in a direction from the first end portion to the second end portion, and has an inclined surface formed between the first end portion and the second end portion.

Further, the engaging block structure further includes an elastic cushion block, and the elastic cushion block is connected to a side of the engaging block body away from the sealing elastic strip.

Further, a positioning structure for positioning with a refrigerator door is connected to a side of the seal body away from the sealing elastic strip, the positioning structure includes a positioning block, and a positioning groove is formed in a side of the positioning block away from the sealing elastic strip.

A vehicle-mounted refrigerator provided according to an embodiment of the present invention includes a refrigerator door, a refrigerator frame and the refrigerator seal according to any one of the above embodiments, and the refrigerator door is movably connected with the refrigerator frame. The refrigerator door or the refrigerator frame has an installation groove with an opening facing the refrigerator frame or the refrigerator door, and the seal body is connected in the installation groove. When the refrigerator door is closed, the refrigerator door moves towards the refrigerator frame, and the refrigerator frame abuts against the sealing elastic strip.

Further, when the refrigerator door is closed, the sealing elastic strip covers the opening of the installation groove, a first elastic strip portion of the sealing elastic strip is located in the installation groove, and part of a second elastic strip portion of the sealing elastic strip protrudes from the installation groove, or part of the second elastic strip portion is flush with the installation groove.

Further, a baffle plate is connected to an inner wall of the installation groove, and the baffle plate abuts against an engaging part of the refrigerator seal.

Further, a baffle plate is connected to an inner wall of the installation groove, the baffle plate is located at a side of an engaging part of the refrigerator seal adjacent to the sealing elastic strip, and the baffle plate abuts against the engaging part.

Further, a positioning projection is arranged in the installation groove, and the positioning projection is located in a positioning groove of the refrigerator seal.

Further, a frame protrusion protruding towards the installation groove is connected to the refrigerator frame, and the frame protrusion abuts against the sealing elastic strip.

Further, a joint of a first elastic strip portion and a second elastic strip portion of the sealing elastic strip, and a third elastic strip portion of the sealing elastic strip are connected at two ends of the second elastic strip portion, respectively; and the joint of the first elastic strip portion and the second elastic strip portion, and the third elastic strip portion are located inside the installation groove, and at least part of the second elastic strip portion is located outside the installation groove.

A vehicle according to an embodiment of the present invention includes the vehicle-mounted refrigerator described in any one of the above embodiments.

By adopting the above technical schemes, the present invention has the following beneficial effects.

The embodiments of the present invention provide the refrigerator seal, the vehicle-mounted refrigerator and the vehicle, the refrigerator seal includes the seal body and the sealing elastic strip, and the sealing elastic strip is connected to the seal body. The sealing elastic strip includes the elastic strip end part away from the seal body, the sealing elastic strip and the seal body enclose the deformation cavity, and the elastic strip end part is spaced apart from the seal body to form the opening communicated with the deformation cavity. There is the opening between the sealing elastic strip and the seal body of the refrigerator seal, and the opening provides a deformation space for the deformation of the sealing elastic strip and makes the elasticity of the sealing elastic strip better. Thus, the sealing performance of the refrigerator seal is better at a low temperature. The vehicle-mounted refrigerator and the vehicle provided with the refrigerator seal have higher qualities.

### BRIEF DESCRIPTION OF THE DRAWINGS

Fig. 1 is a schematic view of a refrigerator seal according to an embodiment of the present invention.
Fig. 2 is a sectional view of a refrigerator seal at an engaging block structure according to an embodiment of the present invention.
Fig. 3 is a schematic view of a refrigerator seal at a positioning structure according to an embodiment of the present invention.
Fig. 4 is a schematic view of a vehicle-mounted refrigerator according to an embodiment of the present invention.
Fig. 5 is an exploded view of a vehicle-mounted refrigerator according to an embodiment of the present invention.
Fig. 6 is a schematic view of a refrigerator door and a refrigerator seal according to an embodiment of the present invention.
Fig. 7 is a sectional view of a refrigerator door and a refrigerator seal at an engaging block structure according to an embodiment of the present invention.
Fig. 8 is a sectional view of a refrigerator door and a refrigerator seal at a positioning structure according to an embodiment of the present invention.
Fig. 9 is a sectional view of a vehicle-mounted refrigerator according to an embodiment of the present invention.

### DETAILED DESCRIPTION

The specific embodiments of the present invention will be further described with reference to the accompanying drawings.

It is easy to understand that according to the technical scheme of the present invention, without changing the essential spirit of the present invention, a variety of structural modes and implementation modes may be substituted with each other by those ordinary skilled in the related art. Therefore, the following detailed descriptions and drawings are only illustrative explanations of the technical scheme of the present invention, and should not be regarded as the whole of the present invention or as the limitation or restriction to the technical scheme of the present invention.

Orientation terms such as up, down, left, right, front, rear, front, back, top and bottom mentioned or possibly mentioned in this specification are defined relative to structures shown in the drawings, and they are relative concepts, so that they may change accordingly according to their different positions and different use states. Therefore, these or other orientation terms should not be interpreted as restrictive terms.

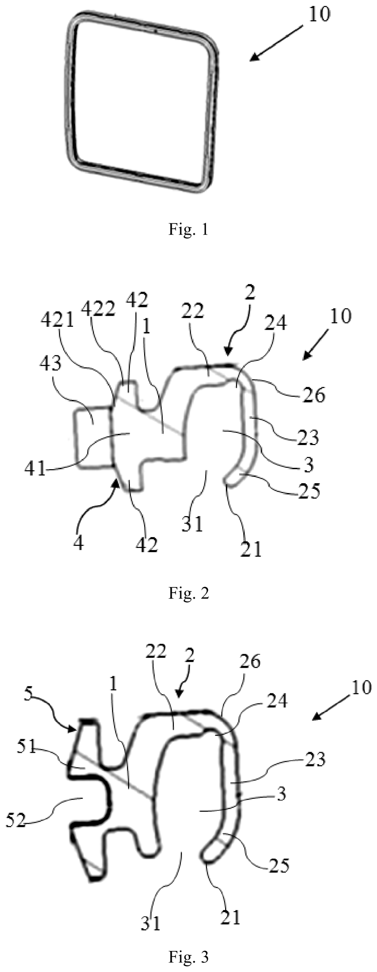

As shown in Figs. 1-3, a refrigerator seal 10 according to an embodiment of the present invention includes a seal body 1 and a sealing elastic strip 2, and the sealing elastic strip 2 is connected to the seal body 1.

The sealing elastic strip 2 includes an elastic strip end part 21 away from the seal body 1, the sealing elastic strip 2 and the seal body 1 enclose a deformation cavity 3, and the elastic strip end part 21 is spaced apart from the seal body 1 to form an opening 31 communicated with the deformation cavity 3.

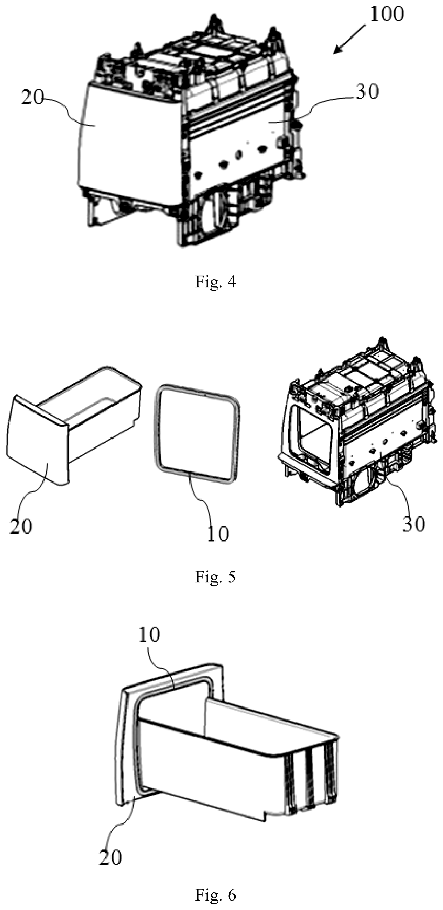

As shown in Figs. 4-5, the refrigerator seal 10 is applied to a vehicle-mounted refrigerator 100 and installed on an inner surface of a refrigerator door 20, which still has good elasticity at a low temperature and ensures a sealing performance.

The refrigerator seal 10 includes a seal body 1 and a sealing elastic strip 2, the seal body 1 is connected to the refrigerator door 20, and the sealing elastic strip 2 is connected to the seal body 1. The sealing elastic strip 2 is strip-shaped, one end of the sealing elastic strip 2 is an elastic strip connection end, and the other end of the sealing elastic strip 2 is the elastic strip end portion 21. The elastic strip connection end is connected with the seal body 1, and the elastic strip end part 21 can move, so that the whole sealing elastic strip 2 can be elastically deformed.

The whole sealing elastic strip 2 is connected to the seal body 1 in a C shape, so that the deformation cavity 3 is enclosed between the sealing elastic strip 2 and the seal body 1, the elastic strip end part 21 is spaced apart from the seal body 1 to define the opening 31 therebetween, and the opening 31 is communicated with the deformation cavity 3.

When the refrigerator door 20 is closed, the sealing elastic strip 2 is squeezed to move towards the seal body 1, the deformation cavity 3 shrinks, and the elastic strip end part 21 gradually approaches and finally abuts against the seal body 1, so that the opening 31 is closed, and the seal body 1 supports the elastic strip end part 21 at this time. The opening 31 provides a space for the elastic strip end part 21 to move, which reduces a resistance of the elastic strip end part 21 moving when the sealing elastic strip 2 is deformed, that is, the deformation ability of the sealing elastic strip 2 is improved. In this way, even if the sealing elastic strip 2 hardens due to the material properties at the low temperature, the opening 31 makes up for loss of elasticity caused by the low temperature, so that the elasticity of the sealing elastic strip 2 meets the requirements and the sealing performance is ensured.

Optionally, the seal body 1 and the sealing elastic strip 2 are integrally formed, and both are made of silica gel or rubber materials.

In an embodiment, as shown in Figs. 2-3, a part of the sealing elastic strip 2 is arranged opposite to the seal body 1, and a projection of this part of the sealing elastic strip 2 towards the seal body 1 covers the seal body 1.

Specifically, the sealing elastic strip 2 is divided into two parts, i.e., having a first sealing part and a second sealing part. The first sealing part is connected with the seal body 1, and the second sealing part is connected with the first sealing part. The second sealing part is arranged opposite to the seal body 1. A projection of the second sealing part towards the seal body 1 covers the seal body 1, that is, the second sealing part covers the seal body 1. When the refrigerator door 20 is closed, the second sealing part rotates towards the seal body 1 around the first sealing part and covers the seal body 1, thus ensuring the sealing effect.

In an embodiment, as shown in Figs. 2-3, another part of the sealing elastic strip 2 is arranged opposite to the opening 31, and a projection of this part of the sealing elastic strip 2 towards the opening 31 covers the opening 31.

Specifically, the sealing elastic strip 2 includes the first sealing part and the second sealing part, the first sealing part is arranged opposite to the opening 31, and a projection of the first sealing part towards the opening 31 covers the opening 31. With this arrangement, when the refrigerator door 20 is opened, the opening 31 can be covered by the sealing elastic strip 2 without being exposed, thus ensuring aesthetics. When the refrigerator door 20 is closed, the sealing elastic strip 2 may be squeezed to be deformed as desired.

In an embodiment, as shown in Figs, 2-3, the sealing elastic strip 2 includes a first elastic strip portion 22 and a second elastic strip portion 23, the first elastic strip portion 22 is connected with the seal body 1, and the second elastic strip portion 23 is connected with the first elastic strip portion 22. A groove 24 is arranged at a joint of the first elastic strip portion 22 and the second elastic strip portion 23, and the groove 24 is communicated with the deformation cavity 3.

Specifically, the sealing elastic strip 2 is composed of the first elastic strip portion 22 and the second elastic strip portion 23. One end of the first elastic strip portion 22 is connected with the seal body 1, and the other end of the first elastic strip portion 22 is connected with one end of the second elastic strip portion 23. The connection of the first elastic strip portion 22 and the second elastic strip portion 23 is defined as a joint 26, and an arc-shaped groove 24 is arranged at an inner side of the joint 26, and is communicated with the deformation cavity 3. That is, a thickness of the joint is smaller than a thickness of the first elastic strip portion 22 and a thickness of the second elastic strip portion 23, and the joint is the thinnest portion of the whole sealing elastic strip 2. This configuration increases the elasticity between the second elastic strip portion 23 and the first elastic strip portion 22, and makes the second elastic strip portion 23 more easily deformed when it is squeezed.

It should be noted that the thickness refers to a distance between inner and outer surfaces of the sealing elastic strip 2, a surface of the sealing elastic strip 2 facing to the seal body 1 is the inner surface of the sealing elastic strip 2, and a surface of the sealing elastic strip 2 facing away from the seal body 1 is the outer surface of the sealing elastic strip 2.

Optionally, the first elastic strip portion 22 has a first connection end and a second connection end, an end of the first elastic strip portion 22 adjacent to the seal body 1 is the first connection end, and an end of the first elastic strip portion 22 adjacent to the second elastic strip portion 23 is the second connection end, and a thickness of the first connection end is greater than a thickness of the second connection end. That is, the first elastic strip portion 22 is tapered in a direction from the first connection end to the second connection end, thus increasing the elasticity of the first elastic strip portion 22.

Optionally, the sealing elastic strip 2 also has a third elastic strip portion 25, one end of the third elastic strip portion 25 is connected with the second elastic strip portion 23, and the other end of the third elastic strip portion 25 extends towards the seal body 1.

Specifically, the other end of the third elastic strip portion 25 is the elastic strip end portion 21, and the other end of the third elastic strip portion 25 is a movable free end. The third elastic strip portion 25 extends obliquely from the second elastic strip portion 23 towards the seal body 1, and an obtuse angle is formed between the third elastic strip portion 25 and the second elastic strip portion 23. When the sealing elastic strip 2 is deformed, the seal body 1 resists the third elastic strip portion 25, so that the sealing elastic strip 2 can be better supported.

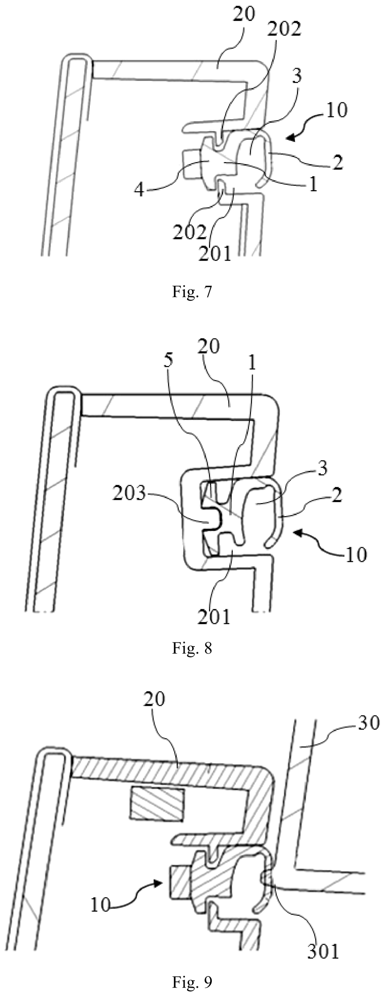

In an embodiment, as shown in Figs. 2-3 and 7, an engaging block structure 4 is connected to a side of the seal body 1 away from the sealing elastic strip 2, and includes an engaging block body 41 and an engaging part 42, and the engaging part 42 is connected to an outer side of the engaging block body 41.

Specifically, the refrigerator seal 10 further includes the engaging block structure 4, which includes the engaging block body 41 and the engaging part 42. The engaging block body 41 is connected to a side surface of the seal body 1 away from the sealing elastic strip 2, and an outer surface of the engaging block body 41 protruding outwards to form the engaging part 42.

When the refrigerator seal 10 is installed, it is engaged with the refrigerator door 20 through the engaging block structure 4, and the fit between the engaging part 42 and the refrigerator door 20 forms a limit, so that the refrigerator seal 10 is firmly installed.

In an embodiment, as shown in Figs. 2-3, the engaging part 42 includes a first end portion 421 connected with the engaging block body 41 and a second end portion 422 away from the first end portion 421, and a width of the first end portion 421 is greater than a width of the second end portion 422.

Specifically, the engaging part 42 has the first end portion 421 and the second end portion 422. The first end portion 421 is connected with the engaging block body 41, and the second end portion 422 is away from the engaging block body 41. The width of the first end portion 421 is larger than the width of the second end portion 422, and the whole engaging part 42 is tapered in a direction from the first end portion 421 to the second end portion 422, so that the engaging part 42 has an inclined surface formed between the first end portion 421 and the second end portion 422. When installing the refrigerator seal 10, the inclined surface has a guiding function and facilitates installation. It should be noted that the width of the engaging part 42 refers to a distance between a side surface of the engaging part 42 adjacent to the sealing elastic strip 2 and a side surface of the engaging part 42 away from the sealing elastic strip 2.

In an embodiment, as shown in Figs. 2-3, the engaging block structure 4 further includes an elastic cushion block 43, which is connected to the side of the engaging block body 41 away from the sealing elastic strip 2.

Specifically, the elastic cushion block 43 has elasticity. When the seal body 1 is pressed to be deformed, the elastic cushion block 43 is deformed and provides a reaction force to act on the sealing elastic strip 2, so that the sealing elastic strip 2 is closely fitted to an object providing pressure, thus improving the sealing performance.

In an embodiment, as shown in Figs. 2-3 and 8, a positioning structure 5 for positioning with the refrigerator door 20 is connected to the side of the seal body 1 away from the sealing elastic strip 2, the positioning structure 5 includes a positioning block 51, and a positioning groove 52 is formed in a side of the positioning block 51 away from the sealing elastic strip 2 by recessing the side of the positioning block 51 away from the sealing elastic strip 2.

Specifically, the positioning structure 5 is further connected to the seal body 1, and includes the positioning block 51, and the positioning block 51 is connected to the side of the seal body 1 away from the sealing elastic strip 2. The positioning groove 52 is formed in the side of the positioning block 51 away from the sealing elastic strip 2, and the positioning groove 52 is configured to be fitted with a positioning piece on the refrigerator door 20, thus preventing the refrigerator seal 10 from being loosened.

Optionally, the seal body 1 is annular and is sleeved on the refrigerator door 20. A plurality of engaging block structures 4 and a plurality of positioning structures 5 are respectively arranged on the seal body 1. The plurality of engaging block structures 4 are arranged at intervals, the plurality of positioning structures 5 are arranged at intervals, one engaging block structure 4 is arranged between two adjacent positioning structures 5, and one positioning structure 5 is arranged between any two adjacent engaging block structures 4.

As shown in Figs. 1-6, a vehicle-mounted refrigerator 100 according to an embodiment of the present invention includes a refrigerator door 20, a refrigerator frame 30 and the refrigerator seal 10 according to any one of the above embodiments, and the refrigerator door 20 is movably connected with the refrigerator frame 30.

The refrigerator door 20 or the refrigerator frame 30 is provided with an installation groove 201 having an opening facing the refrigerator frame 30 or the refrigerator door 20, and the seal body 1 is connected in the installation groove 201.

When the refrigerator door 20 is closed, the refrigerator door 20 moves towards the refrigerator frame 30, and the refrigerator frame 30 or the refrigerator door 20 abuts against the sealing elastic strip 2.

Specifically, the vehicle-mounted refrigerator 100 includes the refrigerator door 20, the refrigerator frame 30, and the refrigerator seal 10. Reference may be made to the relevant contents mentioned above for the specific structures and functions of the refrigerator seal 10, which will not be repeated here.

The refrigerator door 20 can move relative to the refrigerator frame 30, so that it can be opened and closed. The refrigerator seal 10 is installed on the side of the refrigerator door 20 facing the refrigerator frame 30. The refrigerator door 20 has the installation groove 201, and the opening of the installation groove 201 faces the refrigerator frame 30. In other embodiments, the installation groove 201 may also be arranged on the refrigerator frame 30, and the opening of the installation groove 201 faces the refrigerator door 20. Hereinafter, the installation groove 201 is arranged on the refrigerator door 20 as an example.

The refrigerator seal 10 is installed in the installation groove 201, and a part of the sealing elastic strip 2 extends out of the opening of the installation groove 201. When the refrigerator door 20 is closed, the refrigerator frame 30 abuts against the sealing elastic strip 2 to achieve sealing. The refrigerator seal 10 can still maintain good elasticity at the low temperature, so that it has a good sealing performance after abutting against the refrigerator frame 30 at the low temperature.

Alternatively, after the sealing elastic strip 2 abuts against the refrigerator frame 30, the surface of the sealing elastic strip 2 abutting against the refrigerator frame 30 is flush with the opening of the installation groove 201. This reduces a gap between the refrigerator door 20 and the refrigerator frame 30 when the refrigerator door 20 is closed, which is more athletics.

In an embodiment, as shown in Figs. 5-8, when the refrigerator door 20 is closed, the sealing elastic strip 2 covers the opening of the installation groove 201, the first elastic strip portion 22 of the sealing elastic strip 2 is located in the installation groove 201, and part of the second elastic strip portion 23 protrudes from the installation groove 201, or part of the second elastic strip portion 23 is flush with the installation groove 201.

Specifically, the sealing elastic strip 2 has the first elastic strip portion 22 and the second elastic strip portion 23. Reference may be made to the above relevant contents for the specific structures of the first elastic strip portion 22 and the second elastic strip portion 23, which will not be repeated here. When the refrigerator door 20 is closed, the sealing elastic strip 2 is compressed and deformed. After the refrigerator door 20 is completely closed, the whole first elastic strip portion 22 is located in the installation groove 201, and the second elastic strip portion 23 covers the opening of the installation groove 201 and part of the second elastic strip portion 23 protrudes from the installation groove 201, thus ensuring complete sealing and improving the sealing effect. Alternatively, when the refrigerator door 20 is closed, the sealing elastic strip 2 is squeezed, the whole sealing elastic strip 2 is located in the installation groove 201, and an outer surface of the sealing elastic strip 2 away from the refrigerator door 20 is flush with the opening of the installation groove 201, thus reducing the gap between the refrigerator door 20 and the refrigerator frame 30 when the refrigerator door 20 is closed, which is more athletics.

In an embodiment, as shown in Figs. 1-3 and 6-7, a baffle plate 202 is connected to an inner wall of the installation groove 201, and the baffle plate 202 abuts against the engaging part 42 of the refrigerator seal 10.

The baffle plate 202 is located on the side of the engaging part 42 adjacent to the sealing elastic strip 2, and the baffle plate 202 abuts against the engaging part 42, thus preventing the refrigerator seal 10 from moving towards the refrigerator frame 30.

Specifically, for convenience of explanation, a side of the refrigerator door 20 adjacent to the refrigerator frame 30 is taken as front, and a side of the refrigerator frame 30 adjacent to the refrigerator door 20 is taken as back. In this embodiment, the baffle plate 202 is connected to a side wall of the installation groove 201. In other embodiments, an opening may be formed in a bottom wall of the installation groove 201, and the baffle plate 202 is arranged on either side of the opening. An engaging groove is formed between the engaging part 42 and the sealing elastic strip 2, and the baffle plate 202 is located in the engaging groove and can abut against the engaging part 42 and the sealing elastic strip 2 respectively, thus limiting the movement of the refrigerator seal 10 in a front-rear direction.

A side surface of the engaging part 42 away from the sealing elastic strip 2 is an inclined surface. When the refrigerator seal 10 is installed, the engaging part 42 passes through the baffle plate 202. The baffle plate 202 abuts against the inclined surface when the engaging part 42 passes through the baffle plate 202, so that the engaging part 42 is deformed. After the engaging part 42 gets past the baffle plate 202, the engaging part 42 recovers its deformation. The inclined surface plays a guiding role in this process, which reduces the resistance of installation.

In an embodiment, as shown in Figs. 1-3, 6 and 8, a positioning projection 203 is arranged in the installation groove 201, and the positioning projection 203 is located in the positioning groove 52 of the refrigerator seal 10.

Specifically, the positioning projection 203 is arranged on a bottom wall of the installation groove 201, and a groove wall of the installation groove 201 opposite to the positioning block 51 is the bottom wall. When the refrigerator seal 10 is fitted with the installation groove 201, the positioning projection 203 is located in the positioning groove 52, thus achieving positioning.

In an embodiment, as shown in Figs. 1-3, 5-6 and 9, a frame protrusion 301 is connected to the refrigerator frame 30 and protrudes towards the installation groove 201, and the frame protrusion 301 abuts against the sealing elastic strip 2.

When the refrigerator door 20 is closed, the frame protrusion 301 pushes the sealing elastic strip 2 to be deformed. This makes the sealing elastic strip 2 deformed to a greater extent, so that a better sealing performance can be achieved.

In an embodiment, as shown in Figs. 2, 3, 7 and 8, the joint 26 of the first elastic strip portion 22 and the second elastic strip portion 23, and the third elastic strip portion 25 are connected at two ends of the second elastic strip portion 23, respectively. The joint 26 of the first elastic strip portion 22 and the second elastic strip portion 23, and the third elastic strip portion 25 are located inside the installation groove 201, and at least part of the second elastic strip portion 23 is located outside the installation groove 201.

Specifically, the installation groove 201 has the bottom wall and the opening opposite to the bottom wall, and a distance between the opening and the bottom wall is defined as a depth of the installation groove 201. A distance between an outer surface of the joint 26 of the first elastic strip portion and the second elastic strip portion and the bottom wall of the installation groove is less than the depth of the installation groove 201, a distance between an outer surface of the third elastic strip portion 25 and the bottom wall of the installation groove is less than the depth of the installation groove 201, and a distance between an outer surface of the second elastic strip portion 23 and the bottom wall of the installation groove is greater than the depth of the installation groove 201. Thus, the joint 26 of the first elastic strip portion and the second elastic strip portion, and the third elastic strip portion 25 are completely located inside the installation groove 201, while part or all of the second elastic strip portion 23 is located outside the installation groove 201. When the refrigerator door 1 is closed, the second elastic strip portion 23 rotates around the joint 26 of the first elastic strip portion and the second elastic strip portion towards the bottom wall of the installation groove. Since the joint 26 of the first elastic strip portion and the second elastic strip portion is located in the installation groove 201, most of the second elastic strip portion 23 can be rotated into the installation groove 201, and cover the installation groove 201. Moreover, since the third elastic strip portion 25 is located in the installation groove 201, when the second elastic strip portion 23 drives the third elastic strip portion 25 to rotate, the third elastic strip portion 25 can better cover the deformation opening between the sealing elastic strip 22 and the seal body 1.

A vehicle (not shown) provided by an embodiment of the present invention includes the vehicle-mounted refrigerator 100 according to any one of the above embodiments.

The vehicle-mounted refrigerator 100 has a better sealing performance, can ensure the sealing performance in a low-temperature environment, can be suitable for more diverse environmental conditions, and thus improves the quality of the vehicle.

To sum up, the present invention provides the refrigerator seal 10, the vehicle-mounted refrigerator 100 and the vehicle. The refrigerator seal 10 includes the seal body 1 and the sealing elastic strip 2, and the sealing elastic strip 2 is connected to the seal body 1. The sealing elastic strip 2 includes the elastic strip end part 21 away from the seal body 1, the sealing elastic strip 2 and the seal body 1 enclose the deformation cavity 3, and the elastic strip end part 21 is spaced apart from the seal body 1 to form the opening 31 communicated with the deformation cavity 3. The vehicle-mounted refrigerator 100 includes the refrigerator door 20, the refrigerator frame 30 and the refrigerator seal 10 according to any one of the above embodiments, and the refrigerator door 20 is movably connected with the refrigerator frame 30. The refrigerator door 20 is provided with the installation groove 201 having the opening facing the refrigerator frame 30, and the seal body 1 is connected in the installation groove 201. The vehicle includes the vehicle-mounted refrigerator 100. When the refrigerator door 20 is closed, the refrigerator door 20 moves towards the refrigerator frame 30, and the refrigerator frame 30 abuts against the sealing elastic strip 2. There is the opening 31 between the sealing elastic strip 2 and the seal body 1 of the refrigerator seal 10, and the opening 31 provides a deformation space for the deformation of the sealing elastic strip 2 and makes the elasticity of the sealing elastic strip 2 better. Thus, the sealing performance of the refrigerator seal 10 is better at the low temperature. The vehicle-mounted refrigerator 100 and the vehicle provided with the refrigerator seal 10 have higher qualities.

According to requirements, the above technical schemes can be combined to achieve the best technical effects.

The above only relates to the principle and preferred embodiments of the present invention. It should be pointed out that for those skilled in the art, several other modifications can be made on the basis of the principle of the present invention, which should also be regarded as the protection scope of the present invention.

## Claims

1. A refrigerator seal, comprising a seal body and a sealing elastic strip, wherein the sealing elastic strip is connected to the seal body; and
the sealing elastic strip comprises an elastic strip end part away from the seal body, the sealing elastic strip and the seal body enclose a deformation cavity, and the elastic strip end part is spaced apart from the seal body to form an opening communicated with the deformation cavity.

2. The refrigerator seal according to claim 1, wherein a part of the sealing elastic strip is arranged opposite to the seal body, and a projection of the part of the sealing elastic strip towards the seal body covers the seal body.

3. The refrigerator seal according to claim 1 or 2, wherein a part of the sealing elastic strip is arranged opposite to the opening, and a projection of the part of the sealing elastic strip towards the opening covers the opening.

4. The refrigerator seal according to any one of claims 1-3, wherein the sealing elastic strip comprises a first elastic strip portion and a second elastic strip portion, the first elastic strip portion is connected with the seal body, and the second elastic strip portion is connected with the first elastic strip portion; and
a groove is arranged at a joint of the first elastic strip portion and the second elastic strip portion, and the groove is communicated with the deformation cavity.

5. The refrigerator seal according to claim 1, wherein the sealing elastic strip comprises a first elastic strip portion connected with the seal body and a second elastic strip portion connected with the first elastic strip portion; and
a thickness of a joint of the first elastic strip portion and the second elastic strip portion is less than a thickness of the first elastic strip portion, and the thickness of the joint of the first elastic strip portion and the second elastic strip portion is less than a thickness of the second elastic strip portion.

6. The refrigerator seal according to claim 4, wherein the first elastic strip portion has a first connection end adjacent to the seal body and a second connection end adjacent to the second elastic strip portion, and a thickness of the first connection end is greater than a thickness of the second connection end.

7. The refrigerator seal according to claim 4, wherein the sealing elastic strip further comprises a third elastic strip portion, one end of the third elastic strip portion is connected with the second elastic strip portion, and the other end of the third elastic strip portion extends towards the seal body.

8. The refrigerator seal according to any one of claims 1-7, wherein an engaging block structure is connected to a side of the seal body away from the sealing elastic strip, the engaging block structure comprises an engaging block body and an engaging part, and the engaging part is connected to an outer side of the engaging block body.

9. The refrigerator seal according to claim 8, wherein the engaging part comprises a first end portion connected with the engaging block body and a second end portion away from the first end portion, and a width of the first end portion is greater than a width of the second end portion.

10. The refrigerator seal according to claim 9, wherein the engaging part is tapered in a direction from the first end portion to the second end portion, and has an inclined surface formed between the first end portion and the second end portion.

11. The refrigerator seal according to any one of claims 8-10, wherein the engaging block structure further comprises an elastic cushion block, and the elastic cushion block is connected to a side of the engaging block body away from the sealing elastic strip.

12. The refrigerator seal according to any one of claims 1-11, wherein a positioning structure for positioning with a refrigerator door is connected to a side of the seal body away from the sealing elastic strip, the positioning structure comprises a positioning block, and a positioning groove is formed in a side of the positioning block away from the sealing elastic strip.

13. A vehicle-mounted refrigerator, comprising a refrigerator door, a refrigerator frame and the refrigerator seal according to any one of claims 1-12, wherein the refrigerator door is movably connected with the refrigerator frame;
the refrigerator door or the refrigerator frame has an installation groove with an opening facing the refrigerator frame or the refrigerator door, and the seal body is connected in the installation groove; and
when the refrigerator door is closed, the refrigerator door moves towards the refrigerator frame, and the refrigerator frame or the refrigerator door abuts against the sealing elastic strip.

14. The vehicle-mounted refrigerator according to claim 13, wherein when the refrigerator door is closed, the sealing elastic strip covers the opening of the installation groove, a first elastic strip portion of the sealing elastic strip is located in the installation groove, and part of a second elastic strip portion of the sealing elastic strip protrudes from the installation groove, or part of the second elastic strip portion is flush with the installation groove.

15. The vehicle-mounted refrigerator according to claim 13 or 14, wherein a baffle plate is connected to an inner wall of the installation groove, and the baffle plate abuts against an engaging part of the refrigerator seal.

16. The vehicle-mounted refrigerator according to claim 13 or 14, wherein a baffle plate is connected to an inner wall of the installation groove, the baffle plate is located at a side of an engaging part of the refrigerator seal adjacent to the sealing elastic strip, and the baffle plate abuts against the engaging part.

17. The vehicle-mounted refrigerator according to claims 13-16, wherein a positioning projection is arranged in the installation groove, and the positioning projection is located in a positioning groove of the refrigerator seal.

18. The vehicle-mounted refrigerator according to any one of claims 13-17, wherein a frame protrusion protruding towards the installation groove is connected to the refrigerator frame, and the frame protrusion abuts against the sealing elastic strip.

19. The vehicle-mounted refrigerator according to any one of claims 13-18, wherein a joint of a first elastic strip portion and a second elastic strip portion of the sealing elastic strip, and a third elastic strip portion of the sealing elastic strip are connected at two ends of the second elastic strip portion, respectively; and
the joint of the first elastic strip portion and the second elastic strip portion, and the third elastic strip portion are located inside the installation groove, and at least part of the second elastic strip portion is located outside the installation groove.

20. A vehicle, comprising the vehicle-mounted refrigerator according to any one of claims 13-19.
